Europäisches Patentamt

European Patent Office

Office européen des brevets

(11) Publication number: **0 336 691**
**A2**

## EUROPEAN PATENT APPLICATION

(21) Application number: **89303287.0**

(22) Date of filing: **04.04.89**

(51) Int. Cl.⁴: **H 04 N 1/40**

(30) Priority: **05.04.88 JP 83931/88**

(43) Date of publication of application:
**11.10.89 Bulletin 89/41**

(84) Designated Contracting States: **DE FR GB**

(71) Applicant: **SEIKO INSTRUMENTS INC.**
**31-1, Kameido 6-chome Koto-ku**
**Tokyo 136 (JP)**

(72) Inventor: **Kurokawa, Hiroyuki**
**c/o Seiko Instruments Inc. 31-1 Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) Thermal transfer printer.

(57) A thermal transfer printer is provided for reproducing an original gradated image comprising a plurality of image elements which have individual gradations in the form of a printed image comprising a plurality of image elements and having an image density determined by the number of image elements printed per unit section. A latch circuit (1) receives and latches an input train of image bit data representing the gradations of the image elements of the original image. A data processor (2-5) converts the latched image bit data into a train of binary image bit data representing the image density of the original image to be reproduced. A printing unit (6) is arranged to receive the train of binary image bit data representing the image density of the original image to be reproduced and is operative selectively to print individual image elements such that the image density of the printed image is represented in terms of the number of image elements printed per unit section.

FIG 1

## Description

## THERMAL TRANSFER PRINTER

The present invention relates to a printer of the thermal transfer type.

Normally, image elements printed by a thermal transfer printer cannot have individual gradations. Therefore, in order to print a gradated image, the number of image elements printed per unit section is varied to provide a suitable image density.

On the other hand, an original gradated image to be reproduced by such a printer normally comprises an array of original image elements which have individual gradations. These original image elements are represented by a train of image bit data, which varies in correspondence with the individual gradations of the image elements. Accordingly, the train of image bit data cannot be supplied directly to the thermal transfer printer. It is necessary to convert the train of image bit data into a form appropriate for use in the thermal transfer printer.

Conventionally, such conversion is carried out externally of the printer. An image data source, such as a personal computer etc., connected to the printer conventionally carries out such conversion before feeding the converted train of image bit data to the printer. However, a personal computer requires a considerable amount of processing time for the conversion of the image bit data, because it has to process the image bit data arithmetically bit by bit according to a given programme or software. Thus, such a conventional external data processing device is not practically matched to the high speed of a thermal transfer colour printer.

In accordance with the present invention, there is provided a thermal transfer printer for reproducing an original gradated image comprising a plurality of image elements which have individual gradations in the form of a printed image comprising a plurality of image elements and having an image density determined by the number of image elements printed by per unit section, the printer comprising printing means arranged to receive a train of binary image bit data representing the image density of the original image to be reproduced and operative selectively to print individual image elements such that the image density of the printed image is represented in terms of the number of image elements printed per unit section, and characterised by receiving means for receiving an input train of image bit data representing the gradations of the image elements of the original image, and converting means for successively converting the received train of image bit data into the train of binary image bit data representing the image density of the original image to be reproduced.

The present invention, therefore, provides a printer which may include an internal image bit data processor for converting the received train of image bit data into the train of binary image bit data representing the image density of the original image to be reproduced.

Such an image bit data processor may have several circuit or hardware components including counters and a memory. In this instance, the conversion of the received train of image bit data is preferably carried out by means of a conversion table stored in the memory.

The invention is described further, by way of example, with reference to the accompanying drawings, in which:-

Figure 1 is a block diagram of a colour printer of the thermal transfer type according to the present invention including an image bit data processor;

Figure 2 is a diagram showing image elements of an original image to be printed;

Figure 3 is a diagram showing image elements of a printed image;

Figure 4 is a conversion table stored in a memory of the image bit data processor shown in Figure 1;

Figure 5 is a timing chart for the signals within the image bit data processor shown in Figure 1; and

Figure 6 is a table showing a binary form of an address signal applied to the memory of the image bit data processor shown in Figure 1.

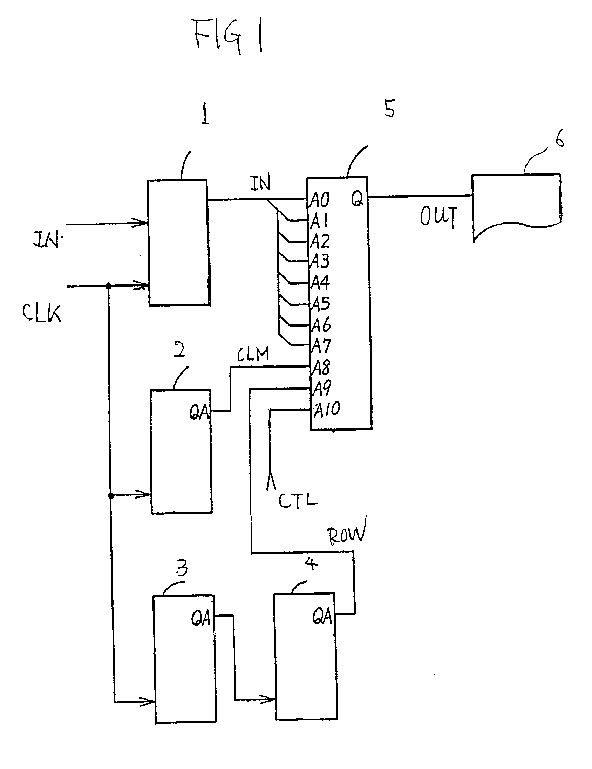

Figure 1 shows a colour printer of the thermal transfer type having an image bit data processor for converting a train of image bit data IN supplied from an external data source (not shown) and indicative of the image density of a gradated original image in terms of individual gradations of a plurality of image elements into a corresponding train of image bit data OUT for output to a printing unit 6 and indicative of the image density of an image to be printed in terms of the number of image elements to be printed per unit section.

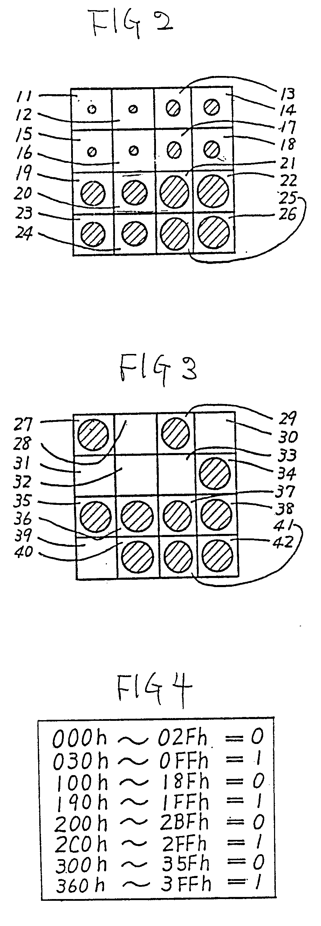

Figure 2 shows an example of a portion of an original gradated image including sixteen image elements 11-26 arranged in a matrix having four rows and four columns. In this example, the individual image elements have four levels of gradation.

Figure 3 shows a corresponding portion of a printed image including up to sixteen image elements 27-42 having a binary gradation achieved by printing or not printing each element. As shown in Figure 3, the thermal transfer printer cannot print image elements having multiple gradations. Accordingly, the image density of the printed image has to be achieved in terms of the number of image elements printed per unit section. In this example, each unit section comprises four adjacent image element locations. The first section comprises the locations for the four elements 27, 28, 31 and 32 and contains only one printed element 27, because the corresponding section of the original image shown in Figure 2 comprises the four elements 11, 12, 15 and 16 which have the lowest level of gradation. The second section comprises the locations for the four elements 29, 30, 33 and 34 and contains two printed elements 29 and 34, because the four corresponding elements 13, 14, 17 and 18 of the original image have the second level of gradation. The third section comprises the locations for the four elements 35, 36, 39 and 40 and contains three printed elements 35, 36 and 40, because the four corresponding elements 21, 22, 25 and 26 of the original image have the highest level of gradation. With reference to Figure 3, the four elements of each unit section are printed in the order of upper left, lower right, upper right and lower left according to the gradation level of the corresponding unit section of the original image. In practice, the original image comprises millions of image elements, and the four adjacent image elements within one unit section have the same gradation level almost everywhere throughout the original image. Therefore, the conversion of the original image exemplified by Figure 2 into the printed image exemplified by Figure 3 is actually practical and does not degrade the quality of the image reproduction.

Referring back to Figure 1, the image bit data processor comprises a latch circuit 1 for sequentially latching the input train of image bit data IN in synchronism with a train of clock or strobe pulses CLK. A column counter 2 successively counts the clock pulses CLK to produce a column position data signal CLM indicating whether an individual image element corresponding to the latched image bit data is located in an odd or uneven column of the image element matrix. A four bit element counter 3 successively counts the clock pulses CLK and outputs a timing pulse on every fourth clock pulse CLK received, and a row counter 4 responsive to the timing pulses from the element counter 3 produces a row position data signal ROW indicating whether an individual image element corresponding to the latched image bit data is located in an odd or an even row of the image element matrix.

A memory 5 has a set of address terminals A0-A10. The address terminals A0-A7 are arranged to receive the latched image bit data sequentially from the latch circuit 1, the address terminal A8 is arranged to receive the column position data signal CLM in synchronisation with the supply of the latched image bit data, the address terminal A9 is arranged to receive the row position data signal ROW in synchronisation with the supply of the latched image bit data, and the last address terminal A10 is arranged to receive additional control data CTL. The memory 5 has stored therein a conversion table addressable by data fed concurrently to the set of address terminals A0 to A10 in order to output or read out sequentially a train of output image bit data OUT for supply to the printing unit 6. Thus, the memory 5 effects the conversion of the train of input image bit data IN representative of the original image into the train of output image bit data OUT representative of the image to be printed or reproduced.

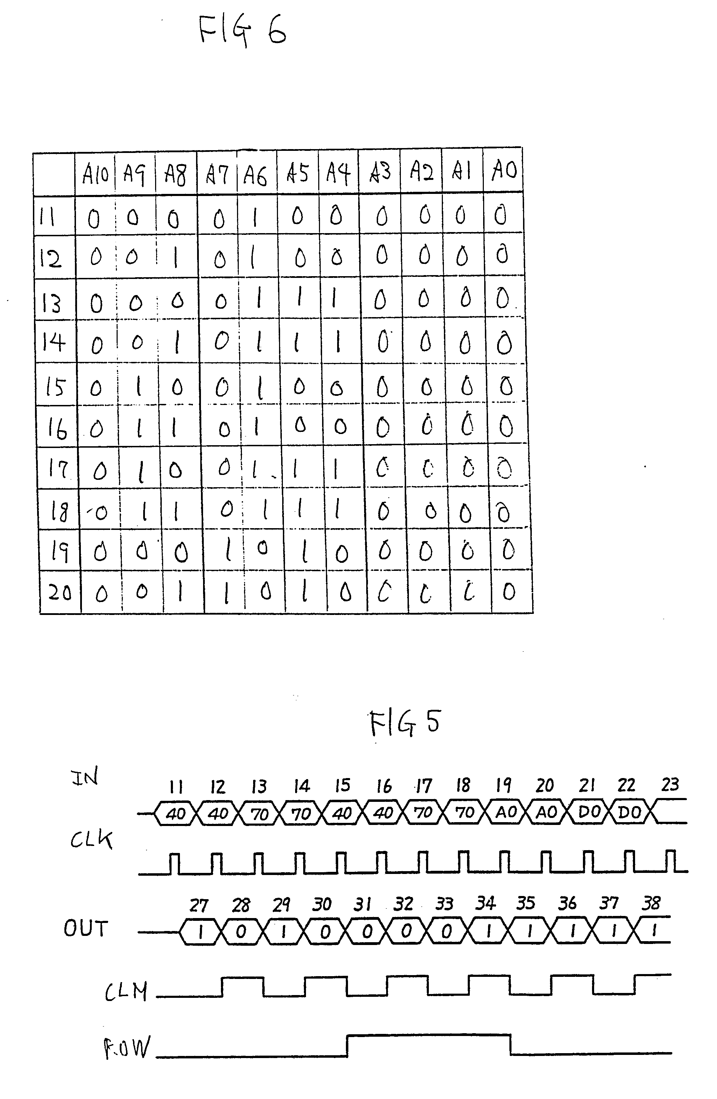

Next, the operation of the image bit data processor will be explained with reference to Figures 4, 5 and 6. Referring to Figure 5, the latch circuit 2 receives and latches the train of input image data IN in synchronization with the clock or strobe pulses CLK. The train of input image bit data IN comprises a plurality of data words corresponding to the plurality of image elements 11-26 of the original image shown in Figure 2. Each input data word has a gradation value indicative of the gradation level of the corresponding image element. For example, the first data word of the train IN has a gradation value of 40h represented in the hexadecimal numeration system ("h" indicates the hexadecimal numeration system), and indicative of the lowest or first gradation level of the corresponding image element 11. The third data word has a gradation value of 70 indicative of the second gradation level of the corresponding image element 13. In a similar manner, the ninth data word has a gradation value of A0h indicative of the third gradation level of the corresponding image element 19. The eleventh data word has a gradation value of D0h indicative of the fourth or highest gradation level of the corresponding image element 21.

The column counter 2 counts the clock pulses CLK to produce the column position data signal CLM. As shown in Figure 5, the column position data signal CLM is set to a low level value in response to the first clock pulse CLK so as to indicate that the corresponding image element 11 is positioned in an odd column, i.e. positioned at the left hand side of a unit section. The column position data signal CLM is switched to a high level value in response to the second clock pulse CLK so as to indicate that the corresponding image element 12 is positioned in an even column, i.e. positioned at the right hand side of the unit section. Thereafter, the column position data signal CLM is switched alternately in response to each clock pulse CLK between the low and high level values, to indicate thereby whether an individual image element corresponding to the latched input image bit data is positioned at the left or right hand side of a unit section.

The element counter 3 counts the number of clock pulses CLK and produces a timing pulse every four clock pulses (which correspond to the number of image elements arranged in one row as shown in Figure 2). The row counter 4 receives the timing pulses and produces the row position data signal ROW. As shown in Figure 5, the row position data signal ROW is switched between low and high level values in response to each successive timing pulse. For the first to fourth data words, the row position data signal ROW is held at the low level value so as to indicate that the corresponding image elements 11-14 are arranged in an odd row, i.e. arranged at the upper edge of the respective unit sections. For the following fifth to eighth data words, the row position data signal ROW is switched to the high level value so as to indicate that the next corresponding image elements 15-18 are arranged in an even row, i.e. positioned at the lower edge of the respective unit sections. Accordingly, the row position data signal ROW is switched between the low and high level logic values every four clock pulses to indicate whether an individual image element corresponding to the currently latched input image bit data is positioned at the upper or lower edge of the relevant unit section.

The memory 5 is provided with the set of address terminals A0-A10, with the terminal A0 being of the lowest order and the terminal A10 being of the highest order. The address terminals receive the latched image bit data, the column position data signal CLM and the row position data ROW concurrently. The address terminals A0 to A7 receive the data words in the binary system of representation, the address terminal A8 receives the column position data signal CLM in the binary representation, and the address terminal A9 receives the row position data signal ROW in the binary representation.

Referring to Figure 6, when processing the first image element 11, the terminals A7 to A0 are set with the value 40h of the first data word in the binary representation (01000000), and the terminals A9 and A8 are set with the values of the row and column position data signals ROW and CLM, respectively, in the binary representation (00), which indicates that the first element 11 is positioned at the upper left hand side of the unit section. The combined binary representation (0001000000) at the terminals A9 to A0 is changed to the corresponding hexadecimal representation 040h to be used as address data. In a similar manner, when processing the second image element 12, the terminals A7 to A0 are set with the value 40h in the binary form (01000000), and the terminals A9 and A8 are set with values of the signals ROW and CLM in the binary form (01), which indicates that the element 12 is positioned at the upper right hand side of the unit section. The combined binary representation (0101000000) at the terminals A9 to A0 is changed to the equivalent hexadecimal representation 140h. When processing the third image element 13, the corresponding combined binary representation (0001110000) input to the memory 5 is changed to the equivalent hexadecimal representation 070h. When processing the fifth image element 15, the corresponding combined binary representation (1001000000) is changed to the equivalent hexadecimal representation 240h in the memory 5. In a similar and sequential manner, when processing the sixth image element 16, the corresponding combined binary representation (1101000000) is changed to the equivalent hexadecimal representation 340h.

Referring to Figure 4, the memory 5 has stored therein a conversion table which comprises an address portion and a content portion. The address portion is divided into eight sections comprising 00h-02Fh, 030h-0FFh, 100h-18Fh, 190h-1FFh, 200h-2BFh, 200h-2FFh, 300h-35FH and 360h-3FFh. The content portion is set with the binary data 0 or 1 according to the address sections. The conversion table of the memory 5 is operable to the output selectively the binary data 0 and 1 according to the hexdecimal address data derived from the address terminals A0 to A9 for generating the train of output image bit data OUT. For example, when converting the first input word representing the image element 11 into a corresponding first output bit representing the image element 27, the corresponding address data 040h falls within the address section 030h-0FFh, so that the memory 5 supplies the output bit 1 according to the conversion table, effective to enable the printing unit 6 to print the image element 27. When converting the second input word representing the image element 12 into the corresponding second output bit representing the image element 28, the corresponding address data 140h falls within the address section 100h-18Fh so that the memory 5 supplies the output bit 0, effective to prevent the printing unit 6 from printing the image element 28. As shown in Figure 5, the memory 5 is operable to produce sequentially the train of output image bit data OUT in the binary form effective to control the printing unit 6 to selectively print or not print the image elements 27 to 42 and thereby to reproduce the original gradated image as shown in Figure 3.

As explained above, according to the present invention, since the input image bit data corresponding to the image elements of the original gradated image and the position data of the image elements are utilized as address data, and the conversion table of the memory is effective to produce the converted output image bit data, the present image bit data processor does not require arithmetic processing time but requires only the time for access of the conversion table. Accordingly, the processing speed of the train of image bit data is greatly improved as compared with the conventional CPU processor. Further, the data processor can be formed with various circuit components such as counters and a memory, thereby simplifying its circuit structure.

In addition, in order to change the arrangement of the printed elements with the unit section of the image to be printed, a control signal CTL is applied to the address terminal A10 such that the addressing of the conversion table can be started from the address 440h. Each unit section comprises four image elements in this embodiment. However, a unit section can be composed of various combinations of adjacent image elements. The memory can store different kinds of conversion tables according to the gradation levels of the original image to be reproduced. The present data processor can be applied not only to the conversion of image density, but also to the conversion of colour code by changing the data arrangement in the memory. The throughput of the processor is substantially determined according to the data transfer capacity.

## Claims

1. A thermal transfer printer for reproducing an original gradated image comprising a plurality of image elements which have individual gradations in the form of a printed image comprising a plurality of image elements and having an image density determined by the number of image elements printed by per unit section, the printer comprising printing means (6) arranged to receive a train of binary image bit data representing the image density of the original image to be reproduced and operative selectively to print individual image elements such that the image density of the printed image is represented in terms of the number of image elements printed per unit section, and characterised by receiving means (1-4) for receiving an input train of image bit data representing the gradations of the image elements of the original image, and converting means (5) for successively converting the received train of image bit data into the train of binary image bit data representing the image density of the original image to be reproduced.

2. A printer according to claim 1 characterised in that the receiving means comprise latching means (1) for successively latching the input train of image bit data in synchronisation with a train of clock pulses, and counting means (2-4) for counting the clock pulses and for producing position data representing the positions of the image elements of the original image.

3. A printer according to claim 2 characterised in that the converting means comprise a memory (5) containing a conversion table which is addressable by a combination of the latched image bit data and the position data for generating the train of binary image bit data representing the image density of the original image to be reproduced.

FIG 1

## FIG 2

## FIG 3

## FIG 4

| | | | |
|---|---|---|---|
| 000h | ~ | 02Fh | = 0 |
| 030h | ~ | 0FFh | = 1 |
| 100h | ~ | 18Fh | = 0 |
| 190h | ~ | 1FFh | = 1 |
| 200h | ~ | 2BFh | = 0 |
| 2C0h | ~ | 2FFh | = 1 |
| 300h | ~ | 35Fh | = 0 |
| 360h | ~ | 3FFh | = 1 |

# FIG 6

| | A10 | A9 | A8 | A7 | A6 | A5 | A4 | A3 | A2 | A1 | A0 |
|---|---|---|---|---|---|---|---|---|---|---|---|
| 11 | 0 | 0 | 0 | 0 | 1 | 0 | 0 | 0 | 0 | 0 | 0 |
| 12 | 0 | 0 | 1 | 0 | 1 | 0 | 0 | 0 | 0 | 0 | 0 |
| 13 | 0 | 0 | 0 | 0 | 1 | 1 | 1 | 0 | 0 | 0 | 0 |
| 14 | 0 | 0 | 1 | 0 | 1 | 1 | 1 | 0 | 0 | 0 | 0 |
| 15 | 0 | 1 | 0 | 0 | 1 | 0 | 0 | 0 | 0 | 0 | 0 |
| 16 | 0 | 1 | 1 | 0 | 1 | 0 | 0 | 0 | 0 | 0 | 0 |
| 17 | 0 | 1 | 0 | 0 | 1 | 1 | 1 | 0 | 0 | 0 | 0 |
| 18 | 0 | 1 | 1 | 0 | 1 | 1 | 1 | 0 | 0 | 0 | 0 |
| 19 | 0 | 0 | 0 | 1 | 0 | 1 | 0 | 0 | 0 | 0 | 0 |
| 20 | 0 | 0 | 1 | 1 | 0 | 1 | 0 | 0 | 0 | 0 | 0 |

# FIG 5

IN

| 11 | 12 | 13 | 14 | 15 | 16 | 17 | 18 | 19 | 20 | 21 | 22 | 23 |
|---|---|---|---|---|---|---|---|---|---|---|---|---|
| 40 | 40 | 70 | 70 | 40 | 40 | 70 | 70 | A0 | A0 | D0 | D0 | |

CLK

OUT

| 27 | 28 | 29 | 30 | 31 | 32 | 33 | 34 | 35 | 36 | 37 | 38 |
|---|---|---|---|---|---|---|---|---|---|---|---|
| 1 | 0 | 1 | 0 | 0 | 0 | 0 | 1 | 1 | 1 | 1 | 1 |

CLM

ROW